# EUROPÄISCHE PATENTANMELDUNG

(11) **EP 1 662 278 A1**
(43) Veröffentlichungstag der Anmeldung: **31.05.2006**
(21) Anmeldenummer: 04028208.9
(22) Anmeldetag: 27.11.2004
(51) Int. Cl.: G02B 5/04, G02B 5/08, G02B 3/00, G02B 23/04, G01B 11/14

(54) **Plankonvex- oder Plankonkavlinse mit damit verbundenem Umlenkmittel**

(71) Anmelder: Leica Geosystems AG, 9435 Heerbrugg (CH)
(72) Erfinder: Fruhmann, Andreas, 6850 Dornbirn (AT); Pozivil, Thomas, 9434 Au (CH); Hinderling, Jürg, 9437 Marbach (CH)
(74) Vertreter: Kaminski, Susanne

(57) **Zusammenfassung**

Bei einer erfindungsgemässen optischen Baugruppe zum Ein- und Ausspiegeln von Strahlenbündeln in einem Messgerät wird wenigestens ein Umlenkmittel (6,6',7,8) mit der planen Fläche von wenigstens einer als Plankonvex- oder Plankonkavlinse ausgebildeten Linse (1,1') verbunden. Die Linse (1,1') wird als Linse (1,1') und als Halterung für das Umlenkmittel (6,6',7,8) verwendet.

Die optische Baugruppe kann auch zwei Linsen (1,1') mit jeweils einem Umlenkmittel (6,6',7,8) umfassen, wodurch eine Trennung zwischen einem Sendestrahlenbündel (3) und einem Empfangsstrahlenbündel (4) erreicht wird.

## Beschreibung

Die Erfindung bezieht sich auf eine optische Baugruppe in einem Messgerät, insbesondere einem elektrooptischen Entfernungsmesser, zum Ein- und Ausspiegeln von Messstrahlen gemäss dem Oberbegriff des Anspruchs 1, sowie die Verwendung der optischen Baugruppe nach Anspruch 6 und auf ein Fernrohr gemäss dem Oberbegriff des Anspruchs 7, sowie ein Panfokal-Fernrohr gemäss dem Oberbegriff des Anspruchs 10.

Messgeräte mit optischen Baugruppen zum Ein- und Auskoppeln von Messstrahlen werden für viele, insbesondere geodätische, bautechnische und militärische, Anwendungen benötigt, so beispielsweise zur Entfernungsmessung und Beobachtung oder zur Beobachtung und Bildaufnahme mit einer Kamera. Eine hohe Messgenauigkeit ergibt sich bei einer Einkoppelung der Messstrahlen auf die optische Achse des Messgeräts. Der Begriff "Messstrahlen" wird für Strahlen verwendet, die vermittels einer optischen Baugruppe in einem optischen Instrument ein- und ausgespiegelt werden. Dies umfasst auch Strahlen, die in einem Gerät ein- und ausgespiegelt werden, aber nicht zum Messen verwendet werden, wie Strahlen zur Beobachtung im Fernrohr oder zur Bildaufnahme mit einer Kamera.

Das Ein- und Auskoppeln von Messstrahlen erfolgt heute meist über Baugruppen, die aus einer Linse, einem Ein- und Auskoppelelement und einer Halterung, über welche das Ein- und/oder Auskoppelelement in den Strahlengang eingebracht wird, zusammengesetzt sind. In der DE 196 15 601 wird ein Koaxial-Abstandsmessgerät offenbart, in welchem Licht für eine Entfernungsmessung über eine Objektivlinse und eine optische Einkoppelvorrichtung in die optische Achse eines Teleskops eingekoppelt wird und über dieselbe Linse und eine optische Auskoppelvorrichtung aus der optischen Achse des Teleskops ausgekoppelt wird. Zum Einbringen der Ein- und Auskoppelvorrichtung in den optischen Strahlengang des Teleskops ist eine scheibenförmige transparente Prismahalteplatte als Halterung vorgesehen. Diese zusätzliche Halteplatte bedingt sowohl eine grössere Baulänge des Messgeräts, als auch Reflexionsverluste. Auch ist es im Allgemeinen schwierig, eine völlig präzise und stabile Ausrichtung der Halterung im optischen Strahlengang des Teleskops zu erreichen. Diesbezügliche Ungenauigkeiten stellen weitere Fehlerquellen bei einer Messung dar. Ausserdem werden Teleskope und Entfernungsmesser bevorzugt im Freien eingesetzt und sollten daher möglichst unempfindlich gegen Temperaturänderungen und mechanische Einflüsse wie Schock und Vibration sein. Jedes einzelne Bauelement im Messgerät reagiert auf Temperaturänderungen, d.h. jedes einzelne Bauteil stellt eine mögliche Fehlerquelle, und damit Einschränkung der Messgenauigkeit, insbesondere der Richtungsstabilität der optischen Zielachse, dar. Es ist daher wünschenswert, unter anderem auch aus Kostengründen, die Anzahl der Bauelemente im Messgerät so klein wie möglich zu halten. Je kleiner die Anzahl der Bauelemente, desto robuster ist die Vorrichtung gegenüber störenden Umwelteinflüssen.
In einem in der US 6,441,887 offenbarten Teleskop erfolgt die Ein- und Auskoppelung von Messstrahlen über eine Prismeneinheit. Diese ist mit mehreren Prismen mit optischen Beschichtungen äusserst komplex im Aufbau und erfordert höchste Genauigkeit bei der Herstellung. Zudem hat diese technische Lösung den Nachteil von störendem Streulicht zwischen den beteiligten Strahlengängen.

Bei der Ein- und Auskoppelung von Messstrahlen zur Entfernungsmessung auf die optische Achse eines Teleskops wird ein weiteres optisches Element benötigt, welches im interessierenden Fall einen Teil der von einem zu vermessenden Objekt reflektierten und/oder gestreuten Strahlung zur Beobachtung im Teleskop durchlässt und einen anderen Teil zu einer Empfangseinrichtung des Entfernungsmessers lenkt. In dem in der DE 196 15 601 beschriebenen Teleskop erfolgt diese Aufteilung über einen dichroitischen Spiegel, welcher als weiteres zusätzliches Element in den Strahlengang des Teleskops eingebracht wird.

In einem in der EP 1 081 459 offenbarten Tachymeter-Fernrohr erfolgt die Aufteilung über ein Strahlenteilerprisma mit teilverspiegelten Flächen. Zusätzlich zu diesem Strahlenteilerprisma muss ein Einkoppelspiegel zum Einkoppeln von Messstrahlen im Tachymeter-Fernrohr mittels einer Halterung befestigt werden, wodurch wiederum bereits erwähnte Ungenauigkeiten, wie Strahlinstabilitäten, auftreten. Mit jedem zusätzlichen Element steigt das Risiko des Einflusses störender Umwelteinflüsse, aber auch der Nachteil von Reflexionsverlusten. Ein wesentlicher Nachteil ist der Platzbedarf jedes einzelnen Bauteils und die dadurch induzierte vergrösserte Baulänge des optischen Instruments.

Die Aufgabe der vorliegenden Erfindung besteht darin, Mängel des Standes der Technik zu beheben und eine optische Baugruppe in einem Messinstrument zum Ein- und Ausspiegeln von Messstrahlen mit möglichst wenigen Bauteilen anzugeben, um Messungenauigkeiten, Baulänge des Messinstruments und Kosten zu verringern, sowie die Robustheit gegenüber Umwelteinflüssen wie Temperatur und Vibration zu steigern.

Eine weitere Aufgabe der Erfindung ist es, ein Fernrohr mit ausreichend guter Bildqualität, insbesondere mit integriertem Entfernungsmesser und/oder Kamera, mit kompakter, insbesondere kurzer, Baulänge und kostengünstiger Bauart und hoher Messgenauigkeit und Robustheit gegenüber Umwelteinflüssen, wie Temperatur und Vibration, bereitzustellen.

Eine weitere Aufgabe der Erfindung ist es, ein Panfokal-Fernrohr, insbesondere mit integriertem Entfernungsmesser und/oder Kamera, mit kompakter, insbesondere kurzer, Baulänge und kostengünstiger Bauart und hoher Messgenauigkeit und Robustheit gegenüber Umwelteinflüssen, wie Temperatur und Vibration, bereitzustellen.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

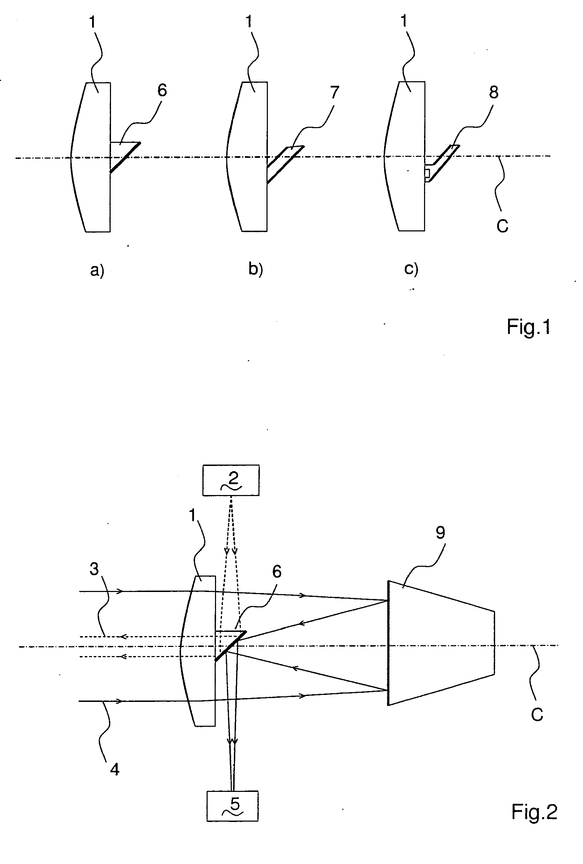

Bei einer in einem Messgerät verwendeten erfindungsgemässen optischen Baugruppe zum Ein- und Ausspiegeln von Messstrahlen wird wenigstens ein Mittel zum Umlenken mit wenigstens einer Linse verbunden, indem die Linse als Plankonvex- oder Plankonkavlinse ausgebildet wird, und das Umlenkmittel mit der Linse an deren planer Fläche verbunden wird. Die Linse ist insbesondere Bestandteil eines Objektivs, und die plane Fläche stellt insbesondere die hinterste Fläche - beispielsweise ist das in Fig. 2 die äusserst rechte Fläche von der Objektivöffnung aus gesehen - des Objektivs dar. Das Umlenkmittel weist vorzugsweise ebenfalls eine plane Fläche auf, welche plane Fläche dann mit der Objektivplanfläche verbunden wird. Eine Fläche wird als plan bezeichnet, falls der zugeordnete Kugelradius mehr als 1000 mm beträgt.

Die Messstrahlen werden als Sendestrahlen von einem Sender ausgesandt und nach Reflexion und/oder Streuung an einem Zielobjekt als Empfangsstrahlen von einem Empfänger empfangen. Als Sender wird vorzugsweise ein Laser eingesetzt, es kann sich je nach Anwendungszweck um divergente und/oder beugungsbegrenzt kollimierte, nicht-sichtbare und/oder sichtbare Strahlung handeln. Bevorzugt wird divergente Strahlung für Messungen auf kooperative, d.h. selbstleuchtende oder reflektierende, Ziele eingesetzt und beugungsbegrenzt kollimierte Strahlung für Messungen auf nicht-kooperative Ziele.

Die Linse - im Allgemeinen die, wie z.B. in Fig. 4 dargestellt, hinterste Linse eines Objektivs - ist als Plankonvexlinse oder als Plankonkavlinse ausgebildet und wird im Allgemeinen als eine von gegebenenfalls mehreren Objektivlinsen verwendet. Um ein abbildendes Objektiv mit möglichst guter Farbkorrektur als auch möglichst kleinen geometrischen Abbildungsfehlern, wie sphärische Aberration, Koma und Verzeichnung, herzustellen, werden im Allgemeinen alle verfügbaren optischen Freiheitsgrade - dies sind Flächenradien, Dicken und Glassorten - benötigt. Mit der Bedingung einer Planfläche an der hinteren Objektivlinse wird nun die Anzahl der Freiheitsgrade um eins reduziert.
Durch spezielle Wahl von Glassorten mit anomaler Teildispersion ist eine qualitativ vergleichbare optische Korrektur bei gleicher Baulänge und gleichen Brennweiten über den Fokussierbereich des Fernrohrs erreichbar. Um aber keine, bzw. möglichst wenige, hochbrechende oder hochdispersive, im Allgemeinen schwer bearbeitbare Spezialgläser zu verwenden, wird ein Teil der optischen Korrektur auf das Fokussierglied gelegt. Daher werden für die optische Baugruppe mit im Allgemeinen grosser Apertur vorzugsweise Normalgläser, die leicht bearbeitbar und kostengünstig sind, ausgewählt. Die optische Nachkorrektur, insbesondere die Verbesserung von Farbrestfehlern im Sinne der Apochromasie, erfolgt im zweiten optischen Glied oder im beweglichen Fokussierglied. Dort wird wenigstens eine der Glassorten mit einer relativen Teildispersion P_{g,F} bei den Wellenlängen g=435.8nm und F=486.1nm, welche um mindestens 0.005 von denjenigen der Normalgläser abweicht, ausgewählt. Die optische Korrektur der optischen Baugruppe hingegen ist über die volle Apertur derart ausgelegt, dass das Punktbild die Empfangseinheit gerade noch effizient trifft, wohingegen die optische Korrektur über den Oeffnungsbereich der ausgehenden Sendestrahlen beugungsbegrenzt ist.

Das Gegenstück zur Planfläche der als Plankonvexlinse oder als Plankonkavlinse ausgebildeten Linse bildet ein Mittel zum Umlenken. Dieses Mittel zum Umlenken kann als Prisma oder als Würfel mit einer Teilerschicht oder Spiegelschicht ausgebildet sein. Es könnten aber beispielsweise auch zwei Prismen verwendet werden. Ebenso sind als Mittel zum Umlenken grundsätzlich Winkelspiegel oder einstückige Spiegel mit integrierter Halterung zum Befestigen geeignet. Ein Vorderflächenspiegel als Mittel zum Umlenken hat den Vorteil, dass der Anteil unerwünschter Streustrahlung vom Sender in den Empfänger verringert werden kann.
Für die Verbindung von Linse und Umlenkmittel gibt es vielfältige Möglichkeiten. Beispielsweise kann das Umlenkmittel mit der Linse verklebt werden. Genauso können Linse und Umlenkmittel miteinander verkittet werden. Verkleben bedeutet insbesondere, dass die Verbindung ausserhalb des optischen Strahlengangs erfolgt, während Verkitten insbesondere eine Verbindung im optischen Strahlengang - d.h. Strahlendurchgang durch das Kittmittel - bezeichnet. Eine moderne und insbesondere positionsstabile Variante ist eine Plan-Plan-Verbindung über Diffusionsschweissen. Linse und Umlenkmittel könnten aber auch als einstückiges Bauteil gefertigt sein. Vorzugsweise wird sowohl die Linse, als auch das Umlenkmittel aus Glas, gegebenenfalls auch mit unterschiedlichen optischen Kennzahlen, hergestellt, es sind aber auch andere optische Materialien denkbar.

Die Befestigung des Umlenkmittels erfolgt an der planen Fläche der Linse. Die Verbindung des Umlenkmittels mit der planen Fläche der Linse kann an einer planen Fläche des Umlenkmittels erfolgen, sie kann auch an einer nicht zusammenhängenden, beispielsweise mit Senkungen und Rillen versehenen, Planfläche, im Extremfall mit lediglich punktförmigen Berührungsstellen, erfolgen. Auch könnte das Umlenkmittel eine nicht plane Fläche aufweisen und mit der nicht planen Fläche an der planen Fläche der Linse angebracht werden. Die Verbindung über zwei plane Seitenflächen gewährleistet aber hohe Stabilität, wie Winkeltreue, und ist deshalb bevorzugt anzuwenden.

Die Anordnung des Umlenkmittels kann, muss aber nicht, auf der optischen Achse der Linse bzw. des Messgeräts erfolgen. Die Positionierung auf, beziehungsweise möglichst nahe der optischen Achse eines Messgeräts ist gerade für Messungen auf nicht-kooperative Ziele wünschenswert und vorteilhaft. Für Messungen mit reflektierten Strahlen mit hoher Parallelität bei Messungen auf kooperative Ziele, sollte das Umlenkmittel in geeigneter Art und Weise so positioniert werden, dass die durch das Umlenkelement bedingte Abschattung der reflektierten und/oder gestreuten Strahlung möglichst gering gehalten wird. Zur Vermeidung der eben genannten Abschattung ist es auch zweckmässig, das Umlenkmittel als möglichst kleines und gegebenenfalls asymmetrisches Bauteil auszubilden. Ein Beispiel dafür ist aus der DE 196 15 601 bekannt.

Eine Ausführung der optischen Baugruppe mit zwei Linsen mit jeweils einem Umlenkmittel bietet den Vorteil, dass eine verbesserte Trennung von Sende- und Empfangskanal erreicht wird, d.h. der unerwünschte Crosstalk zwischen Sender und Empfänger wird verringert und die Messgenauigkeit wesentlich erhöht. Es versteht sich, dass die Trennung von Sende- und Empfangskanal auch mit dem Einsetzen einer einzigen optischen Baugruppe erreicht werden könnte, z.B. indem das Empfangsstrahlenbündel direkt zur Empfangseinheit gelenkt wird, oder auch indem ein zweites Mittel zum Auskoppeln in den optischen Strahlengang eingebracht wird, beispielsweise mittels einer Halterung oder Halteplatte.

Eine erfindungsgemässe optische Baugruppe kann zum Ein- und Auskoppeln von Messstrahlen, beispielsweise für einen Entfernungsmesser in ein Fernrohr, verwendet werden. Selbstverständlich können genauso Messstrahlen für beispielsweise ein optisches Interferometer, eine Zielsucheinheit, eine Kamera, oder eine andere Messung über die optische Baugruppe in ein Fernrohr oder ein anderes Messinstrument ein- und ausgespiegelt werden. Die Linse wird in ihrer Funktion als Linse verwendet, hat aber gleichzeitig die zusätzliche Funktion einer Halterung. Damit wird im Messgerät ein Bauteil weniger benötigt.

Ein weiteres Bauteil im Messgerät kann, beispielsweise beim Einsatz in Fernrohren, gespart werden, indem auch das Bildaufrichtsystem für zwei Funktionen verwendet wird. Wird das Bildaufrichtsystem zwischen Umlenkmittel und Fokussierlinse angeordnet, kann das Bildaufrichtsystem zusätzlich zu dessen Funktion der Bildumkehrung dazu verwendet werden, einen Teil der von einem Zielobjekt reflektierten und/oder gestreuten Strahlung auf das Umlenkmittel zu richten.

Auch in einem Panfokal-Fernrohr kann eine erfindungsgemässe optische Baugruppe zum Ein- und Auskoppeln von Messstrahlen eingesetzt werden. Wie beim Fernrohr können Messstrahlen für beispielsweise Entfernungsmesser und/oder Kameras mittels der optischen Baugruppe in das Panfokal-Fernrohr eingespiegelt werden. Die Integration z.B. eines Entfernungsmessers und/oder einer Kamera in ein Panfokal-Fernrohr ist an sich schon neu. Mit dem Einsatz der erfindungsgemässen optischen Baugruppe in einem Panfokal-Fernrohr für z.B. einen Entfernungsmesser wird darüber hinaus eine kompakte und kostengünstige Bauart des Panfokal-Fernrohrs einerseits durch die Verwendung einer Linse der ersten Objektiveinheit als Halterung für das Umlenkmittel, und andererseits durch die Verwendung einer Linse der zweiten Objektiveinheit als Spiegelsystem erreicht.

Erfindungsgemässe optische Baugruppen und Fernrohre werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
Fig. 1a, 1b, 1c schematisch drei Ausführungsbeispiele erfindungsgemässer optischer Baugruppen,
Fig. 2 schematisch eine erste Ausführungsform der optischen Baugruppe aus Fig. 1a, die einem Entfernungsmesser zugeordnet ist,
Fig. 3 schematisch eine zweite Ausführungsform der optischen Baugruppe aus Fig. 1a, die einem Entfernungsmesser zugeordnet ist,
Fig. 4 schematisch ein Fernrohr mit einer erfindungsgemässen optischen Baugruppe zum Ein- und Ausspiegeln von Messstrahlen in den optischen Strahlengang des Fernrohrs und
Fig. 5 schematisch ein Panfokal-Fernrohr mit einer erfindungsgemässen optischen Baugruppe zum Ein- und Ausspiegeln von Messstrahlen in den optischen Strahlengang des Panfokal-Fernrohrs.

Fig. 1 zeigt in drei Teilfiguren 1a, 1b, 1c drei mögliche Ausführungsbeispiele einer erfindungsgemässen optischen Baugruppe. Der Baugruppe sind hier eine Linse und ein Umlenkmittel 6,6',7,8 zugeordnet. Die Linse 1 wird im Folgenden immer als Plankonvexlinse dargestellt, kann aber sowohl als Plankonvexlinse, als auch als Plankonkavlinse ausgebildet sein. In Fig. 1a ist die Linse 1 mit einem als Prisma 6 ausgebildeten Umlenkmittel dargestellt. In Fig. 1b wird ein Vorderflächenspiegel 7 als Umlenkmittel mit der Linse 1 kombiniert. Fig. 1c zeigt die Linse 1 und eine mögliche Ausbildung des Umlenkmittels als mit integrierter Halterung an der Linse befestigen Spiegel, im Folgenden als Halterungs-Spiegel 8 bezeichnet, das Umlenkmittel könnte hier auch ein als einstückiges Bauelement mit Halterung an der Linse 1 befestigtes reflektierendes Element, oder ein Winkelspiegel sein.

Fig. 2 zeigt eine mögliche Ausbildung einer optischen Baugruppe nach Fig. 1a mit einem Spiegelsystem 9. So könnte die optischen Baugruppe beispielsweise in einem Entfernungsmesser aussehen. Ein von einer Sendeeinheit 2 ausgehendes Sendestrahlenbündel 3 trifft auf ein Umlenkmittel - hier als Prisma 6 dargestellt - und wird anhand des Umlenkmittels zur Linse 1 gelenkt. Das Prisma 6 ist hier mit einer dichroitischen oder metallisch spiegelnden Reflexionsschicht ausgebildet, an welcher die Strahlenbündel umgelenkt werden. Das Sendestrahlenbündel 3 wird vermittels der Plankonvexlinse gegen ein hier nicht dargestelltes Zielobjekt gerichtet. Das Zielobjekt kann kooperativ - d.h. selbstleuchtend oder ein Reflektor - sein, es kann aber genauso nicht kooperativ sein, wie z.B. eine natürliche rauhe Oberfläche. Am Zielobjekt wird das Sendestrahlenbündel 3 reflektiert und/oder gestreut. Der reflektierte und/oder gestreute Teil des Sendestrahlenbündels 3 - als Empfangsstrahlenbündel 4 bezeichnet - der wieder auf die Linse 1 trifft, wird vermittels der Linse 1 zum Spiegelsystem 9 gelenkt. Das Spiegelsystem 9, welches in z.B. einem Fernrohr auch zur Bildumkehr verwendet werden kann, ist hier als trapezförmiger Glaskörper mit einer dichroitischen Reflexionsschicht dargestellt. Das Spiegelsystem 9 kann selbstverständlich auch eine andere Form haben, es kann auch aus einem anderen optischen Material gebildet sein. Genauso kann es aus mehr als nur einem Stück ausgebildet sein. Mittels des Spiegelsystems 9 wird das Empfangsstrahlenbündel 4 zum als Prisma 6 ausgebildeten Umlenkmittel gerichtet und vermittels des Umlenkmittels zu einer Empfangseinheit 5 umgelenkt. Das Empfangsstrahlenbündel 4 könnte auch direkt vom Spiegelsystem 9 zur Empfangseinheit 5 gelenkt werden. Es ist natürlich auch ohne Spiegelsystem 9 möglich, das Empfangsstrahlenbündel 4 zu empfangen, z.B. indem die Empfangseinheit 5 im Wesentlichen an der Position des Spiegelsystems 9, aber im abbildenden Abstand zur Linse 1 angeordnet wird. Auch versteht es sich, dass das Umlenkmittel nicht notwendigerweise zum Ein- und Auskoppeln der Messstrahlen verwendet werden muss, es ist genauso möglich, das Umlenkmittel nur zum Einkoppeln oder nur zum Auskoppeln der Strahlen zu nutzen.
Das hier als Prisma 6 dargestellte Umlenkmittel ist hier auf der optischen Achse C der Linse 1, bzw. auch des Messgeräts, angeordnet. Die Anordnung, dass die optische Achse des Umlenkmittels mit der optischen Achse C der Linse 1 und/oder des Messinstruments, in welches die optische Baugruppe eingebaut ist, zusammenfällt, ist für viele Anwendungen, wie z.B. eine Entfernungsmessung in einem Zielfernrohr, vorteilhaft. Auch ist es im Allgemeinen vorteilhaft, das Umlenkmittel möglichst klein auszubilden, um die durch das Umlenkmittel bedingte Abschattung des Empfangsstrahlenbündels 4 möglichst gering zu halten.

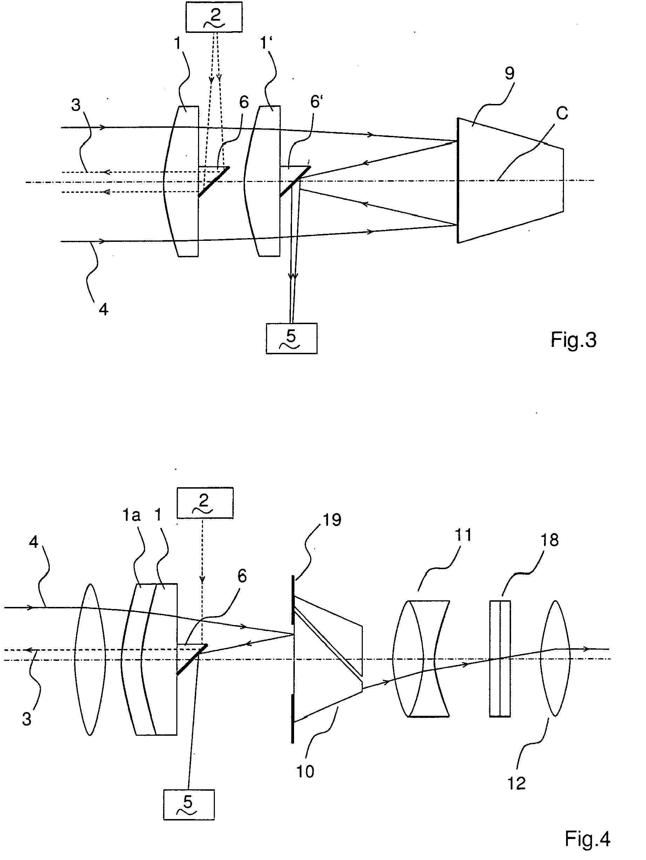

In Fig. 3 dargestellt ist eine weitere mögliche Ausführungsform der optischen Baugruppe. Die optische Baugruppe umfasst in dieser Darstellung zwei Linsen 1,1' mit jeweils einem als Prisma 6,6' ausgebildeten Umlenkmittel und ein Spiegelsystem 9 - auch als Bildaufrichtesystem verwendbar - mit einer reflektierenden Schicht. Analog zu Fig. 2 wird ein Sendestrahlenbündel 3 von einer Sendeeinheit 2 vermittels des ersten Prismas 6 und der ersten Linse 1 in Richtung eines nicht gezeigten Zielobjekts gelenkt, vom Zielobjekt reflektiert und/oder gestreut und als Empfangsstrahlenbündel 4 mittels der ersten Linse 1 und einer zweiten Linse 1', die in der Figur rechts von der ersten Linse 1 angeordnet ist, zum Spiegelsystem 9 gerichtet. An der reflektierenden Schicht des Spiegelsystems 9 wird das Empfangsstrahlenbündel 4 zurückreflektiert und/oder gestreut und trifft auf das mit der zweiten Linse 1' verbundene Prisma 6', vermittels welchem es zu einer Empfangseinheit 5 gelenkt wird. Diese Ausbildung der optischen Baugruppe ermöglicht eine sehr gute Trennung zwischen Sendestrahlenbündel 3 und Empfangsstrahlenbündel 4 und stellt eine Möglichkeit dar, die unerwünschte, störende, Messungen verfälschende Streustrahlung des Sendestrahlenbündels 3 zur Empfangseinheit 5 zu reduzieren. Diese optische Baugruppe kann beispielsweise in einem Entfernungsmesser mit hoher Signalempfindlichkeit eingesetzt werden, ist aber natürlich nicht auf einen Entfernungsmesser beschränkt, sondern kann auch in anderen optischen Messinstrumenten genutzt werden.

Fig. 4 zeigt ein Fernrohr, in welchem eine optische Baugruppe aus Fig. 1a zum kompakten, koaxialen und stabilen Ein- und Ausspiegeln von Messstrahlen, beispielsweise für eine Entfernungsmessung, auf die optische Achse des Fernrohrs verwendet wird. Ein von einer Sendeeinheit 2 ausgesandtes Sendestrahlenbündel 3 wird anhand des Umlenkmittels - als Prisma 6 dargestellt - und der Linse 1, welche hier als hinterste Linse einer Objektiveinheit ausgebildet ist und gegebenenfalls mit einer oder mehreren Linsen 1a verbunden - z.B. verkittet - ist, gegen ein Zielobjekt gerichtet, und das am Zielobjekt reflektierte und/oder gestreute Strahlenbündel trifft als Empfangsstrahlenbündel 4 auf die Linse 1 und wird zu einem Bildaufrichtsystem 10 geleitet. Das Bildaufricht- oder Bildumkehrsystem 10 ist hier als Pechan-Prisma mit einer für Strahlung teildurchlässigen, insbesondere spektral dichroitischen, Schicht ausgebildet. Ein Teil der vom Zielobjekt reflektierten und/oder gestreuten Strahlen wird am Bildaufrichtsystem 10 zum als Prisma 6 dargestellten Umlenkmittel reflektiert und/oder gestreut, und ein Teil wird durch das Bildaufrichtsystem 10 transmittiert und gelangt zum Okular 12. Zur Anzielung eines Zielobjekts kann z.B. eine Zielachsenmarkierung 18 in die Bildebene des visuellen Fernrohrkanals eingebracht werden. Die Pupille 19 der eigentlichen visuellen Abbildung kann im Fernrohr nach innen gelegt sein, während die Linse 1 der optischen Baugruppe mit ihrer vollen Apertur das zurückkommende Empfangsstrahlenbündel 4 sammelt und via Prisma 6 zum Empfänger 5 leitet. Die optische Baugruppe im Fernrohr kann selbstverständlich auch zum Ein- und Auskoppeln von Strahlen für eine Kamera oder ein anderes elektro-optisches Gerät verwendet werden.

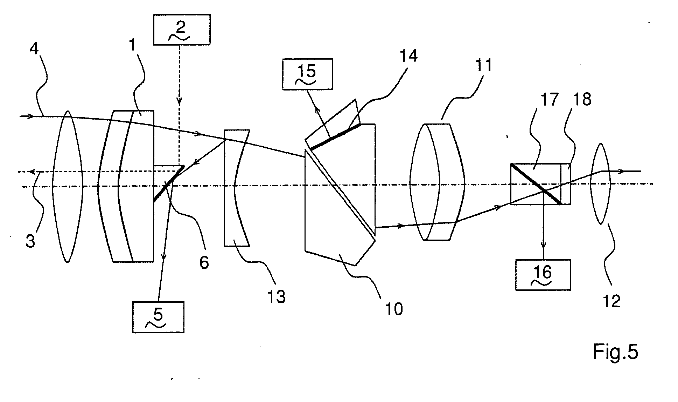

In Fig. 5 ist ein Panfokal-Fernrohr mit einer optischen Baugruppe aus Fig. 1a gezeigt. Ein Panfokal-Fernrohr zeichnet sich durch ein mit der Entfernung variables Gesichtsfeld aus. Im Nahbereich wird wegen dem vergrösserten Gesichtsfeld eine bessere Objektübersicht erhalten, und im Fernbereich bleibt wegen der erhöhten Winkelvergrösserung eine gute Objektauflösung bestehen. Im Allgemeinen umfasst ein Panfokal-Fernrohr zwei vordere Objektiveinheiten, ein Bildaufrichtsystem 10, eine Fokussiereinheit 11 und ein Okular 12 und ist so aufgebaut, dass eine hohe visuelle Winkelvergrösserung auf grosse Distanzen und eine geringere Winkelvergrösserung auf kleine Distanzen erreicht wird. In dem in Fig. 5 dargestellten Panfokal-Fernrohr wird die optische Baugruppe aus Fig. 1a - selbstverständlich können die optischen Baugruppen aus Fig. 1b und 1c genauso verwendet werden - zur Ein- und Ausspiegelung eines Sende- und Empfangsstrahlenbündels 3, 4, beispielsweise für eine Entfernungsmessung, verwendet. Ausserdem ist hier das Bildaufrichtsystem 10 mit einer zweiten für Strahlen teildurchlässigen, insbesondere spektral dichroitischen, Schicht 14 zum Auskoppeln von weiteren Strahlen, beispielsweise für eine Aufnahme mit einer Kamera, insbesondere einer Fixfokus-Kamera, versehen, d.h. das Empfangsstrahlenbündel 4, welches nach dem Durchgang durch die erste und die zweite Objektiveinheit auf das Bildaufrichtsystem 10 trifft, wird an diesem einerseits in Richtung des Umlenkmittels und/oder der Empfangseinheit 5 reflektiert und/oder gestreut und andererseits durchgelassen und teilweise aus dem optischen Strahlengang des Panfokal-Fernrohrs ausgekoppelt. Schliesslich ist noch ein Strahlteiler 17 in den optischen Strahlengang des Panfokal-Fernrohrs zwischen Fokussiereinheit 11 und Okular 12 eingebracht, vermittels welchem vom Bildaufrichtsystem 10 transmittierte und von der Fokussiereinheit 11 gebündelte Strahlen, beispielsweise für eine Bilderfassung mit einer zweiten, insbesondere fokussierbaren, Kamera, ausgekoppelt werden können. Der Strahlteiler 17 ist hier als Teilerwürfel mit einer teildurchlässigen, insbesondere spektral dichroitischen, Schicht ausgebildet und kann zusätzlich zur Funktion der Strahlausspiegelung dazu genutzt werden, eine Zielachsenmarkierung 18 in der Bildebene des visuellen Panfokal-Fernrohres anzubringen, wofür sonst im. Allgemeinen ein zusätzliches Element im optischen Strahlengang des Panfokal-Fernrohres benötigt wird.

## Patentansprüche

1. Optische Baugruppe, insbesondere für einen Entfernungsmesser,
mit
□ wenigstens einer, insbesondere als Objektivlinse des Entfernungsmessers ausgebildeten, im Allgemeinen einstückigen, Linse (1,1') zum Richten eines von einer Sendeeinheit (2) ausgesandten ersten Strahlenbündels (3) gegen ein Zielobjekt und zum Empfangen und Richten eines vom Zielobjekt reflektierten und/oder gestreuten zweiten Strahlenbündels (4) gegen eine Empfangseinheit (5) und
□ wenigstens einem Mittel zum Umlenken (6,6',7,8), über welches einerseits die von der Sendeeinheit (2) ausgesandte Strahlung als Sendestrahlenbündel (3) in Richtung Zielobjekt gelenkt wird, und über welches gegebenenfalls die vom Zielobjekt reflektierte und/oder gestreute Strahlung als Empfangsstrahlenbündel (4), das über die Linse (1,1') in einen zur optischen Achse (C) der Linse (1,1') im Wesentlichen parallelen Empfangskanal gerichtet wird, aus der optischen Achse (C) der Linse (1,1') zur Empfangseinheit (5) umgelenkt wird,
**dadurch gekennzeichnet, dass**
□ die wenigstens eine Linse (1,1') als Plankonvex- oder Plankonkavlinse ausgebildet ist und
□ das wenigstens eine, insbesondere planoptische, Umlenkmittel (6, 6' , 7, 8) an der planen Fläche der Plankonvex- bzw.Plankonkavlinse angeordnet ist und Linse (1,1') und Umlenkmittel (6,6',7,8) ein im Wesentlichen einstückiges Bauteil darstellen.

2. Optische Baugruppe nach Anspruch 1, **dadurch gekennzeichnet, dass** der optischen Baugruppe zwei Linsen (1,1'), in der Form von Plankonvex- und/oder Plankonkavlinsen, mit jeweils einem Umlenkmittel (6,6',7,8) zugeordnet sind.

3. Optische Baugruppe nach Anspruch 1 oder 2, **dadurch gekennzeichnet, dass** wenigstens ein Umlenkmittel (6,6',7,8) als eine der folgenden Alternativen ausgebildet ist:
- Prisma (6, 6'),
- Vorderflächenspiegel (7),
- Halterungs-Spiegel (8),
- Winkelspiegel.

4. Optische Baugruppe nach einem der vorangehenden Ansprüche, **dadurch gekennzeichnet, dass** eine Verbindung zwischen Umlenkmittel (6,6',7,8) und Plankonvex- bzw. Plankonkavlinse (1,1') mittels einer der folgenden Techniken hergestellt wird:
- Kleben,
- Verkitten,
- Diffusionsschweissen.

5. Optische Baugruppe nach einem der vorangehenden Ansprüche, **dadurch gekennzeichnet, dass** die optischen Baugruppe ein Spiegelsystem (9), über welches das Empfangsstrahlenbündel (4) zum Umlenkmittel (6,6',7,8) und/oder zur Empfangseinheit (5) gerichtet wird, umfasst.

6. Verwendung einer optischen Baugruppe nach einem der vorangehenden Ansprüche zur Ein- und Ausspiegelung des Sende- und Empfangsstrahlenbündels (3,5) auf die optische Achse (C) eines optischen Messgeräts, insbesondere eines Fernrohrs und/oder eines Panfokal-Fernrohrs, wobei das Sende- und Empfangsstrahlenbündel (3,5)
- einer Entfernungsmesseinheit und/oder
- einem Interferometer und/oder
- einer Zielsucheinheit und/oder
- einer Kamera
zuordenbar sind.

7. Fernrohr
mit
□ einer Objektiveinheit mit wenigstens einer Linse (1),
□ einer Sendeeinheit (2) zum Aussenden eines Strahlenbündels als Sendestrahlenbündel (3),
□ wenigstens einem Umlenkmittel (6,6',7,8) zum Lenken des Sendestrahlenbündels (3) in Richtung eines Zielobjekts,
□ einer Empfangseinheit (5) zum Empfangen des vom Zielobjekt reflektierten und/oder gestreuten Sendestrahlenbündels als Empfangsstrahlenbündel (4),
□ insbesondere einem Bildaufrichtsystem (10),
□ einer Fokussiereinheit (11),
□ gegebenenfalls einer Zielachsenmarkierung (18) und
□ einem Okular (12),
**dadurch gekennzeichnet, dass**
□ der Objektiveinheit eine optische Baugruppe nach einem der Ansprüche 1 bis 6 zur Ein- und Ausspiegelung des Sende- und Empfangsstrahlenbündels (3,5) in den optischen Strahlengang des Fernrohrs zugeordnet ist.

8. Fernrohr nach Anspruch 7, **dadurch gekennzeichnet, dass** wenigstens eine der folgenden Baueinheiten aus Glas mit einer relativen Teildispersion P_{g,F}, welche um mindestens 0.005 von denjenigen der Normalgläser abweicht, ausgebildet ist:
- Bildaufrichtsystem (10),
- Fokussiereinheit (11).

9. Fernrohr nach Anspruch 7 oder 8, **dadurch gekennzeichnet, dass** das Bildaufrichtsystem (10) zwischen Umlenkmittel (6,6',7,8) und Fokussiereinheit (11) positioniert ist und auch als Spiegelsystem zum Richten des Empfangsstrahlenbündels (4) zum Umlenkmittel (6,6',7,8) und/oder zur Empfangseinheit (5) verwendbar ist.

10. Panfokal-Fernrohr
mit
□ einer ersten Objektiveinheit mit wenigstens einer Linse (1),
□ einer zweiten Objektiveinheit mit wenigstens einer Linse (13),
□ einer Sendeeinheit (2) zum Aussenden eines Strahlenbündels als Sendestrahlenbündel (3),
□ ieiner Empfangseinheit (5) zum Empfangen des von einem Zielobjekt reflektierten und/oder gestreuten Sendestrahlenbündels als Empfangsstrahlenbündel (4),
□ insbesondere einem Bildaufrichtsystem (10),
□ einer Fokussiereinheit (11),
□ einem Okular (12),
**dadurch gekennzeichnet, dass**
□ der ersten Objektiveinheit eine optische Baugruppe nach einem der Ansprüche 1 bis 7 zur Ein- und Ausspiegelung des Sende- und Empfangsstrahlenbündels (3,5) in den optischen Strahlengang des Panfokal-Fernrohrs zugeordnet ist.

11. Panfokal-Fernrohr nach Anspruch 10, **dadurch gekennzeichnet, dass** wenigstens eine der folgenden Baueinheiten aus Glas mit einer relativen Teildispersion P_{g,F}, welche um mindestens 0.005 von denjenigen der Normalgläser abweicht, ausgebildet ist:
- zweite Objektiveinheit,
- Bildaufrichtsystem (10),
- Fokussiereinheit (11).

12. Panfokal-Fernrohr nach Anspruch 10 oder 11, **dadurch gekennzeichnet, dass** die zweite Objektiveinheit zwischen Umlenkmittel (6,6',7,8) und Bildaufrichtsystem (10) positioniert ist, und eine Linse (13) der zweiten Objektiveinheit als Spiegelsystem zum Richten des Empfangsstrahlenbündels (4) zum Umlenkmittel (6,6',7,8) und/oder zur Empfangseinheit (5) verwendbar ist.

13. Panfokal-Fernrohr nach einem der Ansprüche 10 bis 12, **dadurch gekennzeichnet, dass** das Bildaufrichtsystem (10) mit wenigstens einer teildurchlässigen Schicht (14) ausgebildet ist, über welche teildurchlässige Schicht (14) Strahlen aus dem Strahlengang des Panfokal-Fernrohrs zu wenigstens einer zweiten Empfangseinheit (15), insbesondere einer Kamera, ausgekoppelt werden.

14. Panfokal-Fernrohr nach einem der Ansprüche 10 bis 13, **dadurch gekennzeichnet, dass** ein weiterer Strahlteiler (17) zwischen der Fokussiereinheit (11) und dem Okular (12) und wenigstens eine dritte Empfangseinheit (16), insbesondere eine Kamera, vorgesehen sind, über welchen Strahlteiler (17) Strahlen aus dem Strahlengang des Panfokal-Fernrohrs zur dritten Empfangseinheit (16) umgelenkt werden.

15. Panfokal-Fernrohr nach Anspruch 14, **dadurch gekennzeichnet, dass** am weiteren Strahlteiler (17) eine Zielachsenmarkierung (18) angeordnet ist.
